# EUROPEAN PATENT SPECIFICATION

(11) **EP 2 025 723 B1**
(45) Date of publication and mention of the grant of the patent: **08.11.2017**
(21) Application number: 07744630.0
(22) Date of filing: 29.05.2007
(51) Int. Cl.: C09C 1/56, C09C 3/10, C09D 11/00, C09D 17/00

(54) **AQUEOUS CARBON BLACK PIGMENT AND WATER-BASED DISPERSION THEREOF**
WÄSSRIGES RUSSPIGMENT UND WASSERBASISDISPERSION DAVON
PIGMENT AQUEUX NOIR DE CARBONE, ET DISPERSION AQUEUSE DE CE PIGMENT

(30) Priority: 02.06.2006 JP 2006154216
(43) Date of publication of application: 18.02.2009
(73) Proprietor: Tokai Carbon Company, Ltd., Minato-ku, Tokyo 107-8636 (JP)
(72) Inventor: SEKIYAMA, Makoto, Tokyo 107-8636 (JP)
(74) Representative: Flaccus, Rolf-Dieter
(86) International application number: PCT/JP2007/061244
(87) International publication number: WO 2007/142168

(56) References cited:
- JP-A- 01 079 278
- JP-A- 09 194 775
- JP-A- 10 183 040
- JP-A- 11 349 848
- JP-A- 2000 327 984
- JP-A- 2003 096 333
- JP-A- 2003 155 436
- JP-A- 2003 342 502
- JP-A- 2005 132 985
- JP-A- 2005 181 753
- US-A1- 2002 077 383
- US-A1- 2003 195 274

## Description

### TECHNICAL FIELD

The present invention relates to a hydrophilic carbon black pigment that is suitably used for an aqueous ink (e.g., inkjet printer ink) and the like, and is useful for materials for which a high resistivity and light-blocking properties are required (e.g., resin compositions, coating compositions, wet toners, water-based paints, and black matrix), heat-curable/UV-curable ink compositions, and the like, and to an aqueous dispersion of the hydrophilic carbon black pigment.

### BACKGROUND ART

An inkjet printer discharges ink droplets from a minute nozzle head to record characters or figures on the surface of a recording medium such as paper. Typical inkjet printing methods include a Bubble Jet (registered trademark) method and a piezo method.

A black dye or a black pigment has been used as a black colouring agent for a recording liquid. In particular, a pigment (particularly a carbon black pigment) has been used advantageously from the viewpoint of the reliability (e.g., water resistance and light resistance) of a recorded image.

However, since carbon black is hydrophobic and has low wettability with water, it is difficult to stably disperse carbon black in an aqueous medium at a high concentration. In order to solve this problem, a method has been developed that oxidizes carbon black to form functional groups having high affinity with an aqueous medium on the surface of the carbon black.

For example, JP-A-48-018186 discloses a method that oxidizes carbon black using a hypohalite aqueous solution, and JP-A-08-003498 discloses a method that oxidizes acidic carbon black using a hypohalite aqueous solution.

JP-A-08-319444 discloses a method that introduces a large number of hydrophilic active hydrogen groups on the surface of carbon black by oxidation to improve and stabilize the dispersibility of the carbon black in an aqueous medium, JP-A-11-049974 discloses a method that treats carbon black with monovalent metal ions after introducing sulfonic acid groups, and JP-A-09-286938 discloses a method that treats carbon black with a hypohalite, and replaces acidic groups by an alkali metal salt to introduce an amine compound.

JP-A-S6479278 discloses a carbon black dispersion which is formed by dispersing a carbon black graft polymer in water and/or an organic solvent, the carbon black graft polymer being obtained by reacting carbon black with a polymer reactive therewith under conditions of 0 to 350°C. According to one of the examples (Example 5), a polyurethane having one terminal isocyanate group per molecule was used as said reactive polymer, the polyurethane being prepared from polypropylene glycol and toluylene diisocyanate using a non-aqueous solvent (toluene). Subsequently, the non-aqueous solution of the polyurethane was reacted with carbon black to obtain the carbon black graft copolymer.

### DISCLOSURE OF THE INVENTION

However, since an aqueous ink prepared by merely dispersing carbon black in an aqueous medium using the above-mentioned treatments exhibits low water resistance and fixability after recording an image, it is difficult to sufficiently deal with high-speed printing.

In order to improve a printer printing method, print speed, and the like, various attempts have been made that coat the surface of carbon black with a surfactant or a resin such as a polymer dispersant to improve the dispersibility of the carbon black in an aqueous medium. In this case, a resin used as the dispersant merely adheres to the surface of carbon black. Therefore, when an aqueous ink for inkjet printers is prepared using carbon black coated with such a dispersant, the dispersant is easily removed from the surface of the carbon black due to a high shear force applied when the ink is discharged from a small nozzle of a nozzle head so that the ink discharge stability is impaired.

Moreover, since the dispersion state gradually becomes unstable during long-term storage, printing failure or a decrease in image reliability occurs.

The present invention was conceived in order to solve the above-mentioned problems. An object of the present invention is to provide a hydrophilic carbon black pigment that is suitable for an inkjet printer aqueous ink and the like and ensures that a printed article exhibits excellent water resistance and fixability, and an aqueous dispersion of the hydrophilic carbon black pigment.

A hydrophilic carbon black pigment according to the present invention that achieves the above object comprises oxidized carbon black and a water-soluble resin, the hydrophilic carbon black pigment being produced by cross-linking the oxidized carbon black and the water-soluble resin in an aqueous medium using a water-dispersible crosslinking agent.

On the surface of the carbon black, functional groups have been formed by oxidation, which functional groups contain active hydrogen.

The water-soluble resin is a resin selected from the group consisting of polyacrylic acid, polymaleic acid, a styrene-acrylic acid copolymer, a styrene-maleic acid copolymer, a styrene-maleic anhydride copolymer, polyvinyl alcohol, a polyether polyol, a hydroxyl group-containing amine polyether, polyoxyethylene, a polyoxyethylene monoalkyl ether, a polyester polyol obtained by a dehydration-condensation reaction of a dibasic acid and a glycol or triol, a lactone polyol obtained by a ring-opening polymerization of cyclic ester monomers, a polycarbonate polyol, an acrylic polyol, a polybutadiene polyol, and a water-soluble phenol resin.

The water-dispersible cross-linking agent is an isocyanate compound containing two or more isocyanate groups in one molecule, the water-dispersible cross-linking agent being obtained by introducing nonreactive hydrophilic groups into an isocyanate-containing compound.

In the hydrophilic carbon black pigment according to the present invention, the isocyanate groups of the isocyanate compound are bonded to the functional groups formed on the surface of the carbon black and the functional groups of the water-soluble resin.

A carbon black aqueous dispersion according to the present invention comprises the above hydrophilic carbon black pigment and an aqueous medium, the hydrophilic carbon black pigment being dispersed in the aqueous medium at a concentration suitable for the desired application.

### BEST MODE FOR CARRYING OUT THE INVENTION

The carbon black used in the present invention is not particularly limited. Furnace black, channel black, acetylene black, thermal black, or the like may be used.

The carbon black may be oxidized by liquid-phase oxidation or gas-phase oxidation. The carbon black may be subjected to liquid-phase oxidation by mixing the carbon black into an aqueous solution of an oxidizing agent (e.g., hydrogen peroxide aqueous solution, nitric acid, sulfuric acid, chlorate, persulfate, or percarbonate), and stirring the mixture. The degree of oxidation may be adjusted by changing the concentration of the oxidizing agent, the oxidation temperature, the oxidation time, the amount of carbon black added to the oxidizing agent aqueous solution, and the like.

When subjecting the carbon black to liquid-phase oxidation, the carbon black and the oxidizing agent aqueous solution are mixed in an appropriate quantitative ratio. The mixture is sufficiently stirred and mixed in a mixing/stirring tank at a temperature between room temperature and 90°C to prepare a slurry. The carbon black is oxidized in the slurry so that hydrophilic functional groups (e.g., carboxyl groups and hydroxyl groups) are produced on the surface of each carbon black agglomerate. The temperature of the slurry is preferably adjusted to 60 to 90°C. It is preferable to add a surfactant so that the carbon black is uniformly dispersed in the slurry. As the surfactant, an anionic surfactant, a nonionic surfactant, or a cationic surfactant may be used. Examples of the anionic surfactant include a fatty acid salt, an alkyl sulfuric ester salt, an alkylaryl sulfonate, and the like. Examples of the nonionic surfactant include a polyoxyethylene alkyl ether, a polyoxyethylene alkyl aryl ether, and the like. Examples of the cationic surfactant include an alkylamine salt, a quaternary ammonium salt, and the like.

The carbon black may be efficiently oxidized by discharging the slurry in which the carbon black is dispersed at high speed under high pressure so that collision occurs between the carbon black particles (i.e., the carbon black agglomerates are atomized). The slurry is discharged at high speed from a nozzle under pressure so that collision occurs between the discharged streams or between the discharged streams and a wall surface. The carbon black agglomerates in the slurry are atomized due to collision or a shear force. The term "carbon black agglomerate" used herein refers to an agglomerate in which carbon black aggregates (in which primary carbon black particles are firmly bonded) are entangled and aggregated.

The slurry is then purified using a separation membrane such as an ultrafilter (UF) membrane, a reverse osmosis (RO) membrane, or an electrodialysis membrane to remove salts produced by oxidation and unreacted oxidizing agent. The concentration of the carbon black in the oxidized carbon black slurry is adjusted to 5 to 30 wt%.

When utilizing gas-phase oxidation, the carbon black is oxidized by causing the carbon black to come in contact with ozone, air, or the like at an appropriate temperature. Gas-phase oxidation has an oxidizing power lower to some extent than liquid-phase oxidation, but has an advantage in that drying is unnecessary and the operation is easy.

Various functional groups are produced on the surface of the carbon black by oxidation. It is necessary that the functional groups be hydrophilic and react with the water-dispersible crosslinking agent to form crosslinking bonds. The functional groups are not particularly limited insofar as the functional groups contain active hydrogen. Examples of the functional groups include a hydroxyl group, a carboxyl group, an active methylene group, and the like. Among these, a hydroxyl group is preferable from the viewpoint of reactivity, and a carboxyl group is preferable from the viewpoint of dispersibility and reactivity.

An aqueous dispersion of the oxidized carbon black may be provided with dispersion stability by neutralizing the hydrophilic groups on the surface of the carbon black. As a neutralizing agent used for neutralization, a basic organic compound such as sodium hydroxide, potassium hydroxide, sodium carbonate, sodium hydrogen carbonate, TMAH, TBAH, ammonia, ethanolamine, morpholine, choline, imidazole, 2-methylimidazole, 2-ethyl-4-methylimidazole, arginine, lysine, ornithine, or histidine may be used. Any other basic organic compound may also be used.

As the water-soluble resin, a resin having a functional group that contains active hydrogen is used. The resin is selected from the group consisting of polyacrylic acid, polymaleic acid, a styrene-acrylic acid copolymer, a styrene-maleic acid copolymer, a styrene-maleic anhydride copolymer, polyvinyl alcohol, a polyether polyol, a hydroxyl group-containing amine polyether, polyoxyethylene, a polyoxyethylene monoalkyl ether, a polyester polyol obtained by a dehydration-condensation reaction of a dibasic acid and a glycol or triol, a lactone polyol obtained by a ring-opening polymerization of cyclic ester monomers, a polycarbonate polyol, an acrylic polyol, a polybuta-diene polyol, and a water-soluble phenol resin.

As the water-dispersible crosslinking agent that crosslinks the functional groups on the surface of the carbon black produced by oxidation and the water-soluble resin in the aqueous medium, a water-dispersible crosslinking agent that can be dispersed in an aqueous medium and contains two or more isocyanate groups in one molecule is used, the water-dispersible crosslinking agent being produced by introducing nonreactive hydrophilic groups into an isocyanate group-containing compound in order to crosslink the carbon black and the water-soluble resin.

Examples of the isocyanate group-containing compound include diphenylmethane diisocyanate (MDI), polyphenylene polymethylene polyisocyanate, tolylene diisocyanate (TDI), xylylene diisocyanate, tetramethylxylylene diisocyanate, isophorone diisocyanate, hexamethylene diisocyanate (HDI), naphthalene diisocyanate, hydrogenated diphenylmethane diisocyanate, hydrogenated xylylene diisocyanate, and a compound obtained by modifying some of the isocyanate groups of such an isocyanate group-containing compound with a biuret, allophanate, carbodiimide, uretonimine, oxazolidone, amide, imide, isocyanurate, urethodione, or the like, for example. These compounds may be used either individually or in combination. It is preferable to use an aliphatic HDI since such a compound rarely reacts with water and has a long pot life.

The isocyanate compound may be used in combination with a catalyst. As the catalyst, it is preferable to use an organotin catalyst (e.g., dibutyltin dilaurate or dioctyltin dilaurate) or an amine catalyst (e.g., DBU or DBN) due to high catalytic activity.

The hydrophilic carbon black pigment according to the present invention in which the oxidized carbon black and the water-soluble resin are crosslinked in the aqueous medium using a water-dispersible crosslinking agent may be produced by (1) dispersing the oxidized carbon black, the water-soluble resin, and the water-dispersible crosslinking agent in the aqueous medium, and heating the mixture at 50 to 90°C to effect a crosslinking reaction, or (2) heating the oxidized carbon black and the water-dispersible crosslinking agent at 40 to 90°C to bond the oxidized carbon black and the water-dispersible crosslinking agent, adding the water-soluble resin, and heating the mixture at 40 to 90°C to effect a crosslinking reaction, for example.

Any water-soluble resin or water-dispersible crosslinking agent remaining unreacted after the crosslinking reaction may be removed using a separation membrane such as an ultrafiltration (UF) membrane, a reverse osmosis (RO) membrane, or an electrodialysis membrane. Large undispersed clusters or coarse particles may be contained in the carbon black aqueous dispersion thus obtained. In this case, such clusters or particles may be classified and removed by centrifugation or filtration when the resulting product is used for an ink for inkjet printers and the like. The classification/removal step may be performed before or after removing unreacted water-soluble resin and water-dispersible crosslinking agent using a separation membrane.

The carbon black aqueous dispersion according to the present invention includes the above hydrophilic carbon black pigment and an aqueous medium, the hydrophilic carbon black pigment being dispersed in the aqueous medium at a concentration (e.g., 1 to 20 wt%) suitable for the desired application. The aqueous medium may be water or a medium that contains a water-soluble organic solvent. Examples of the water-soluble organic solvent include ethylene glycol, propylene glycol, butylene glycol, diethylene glycol, triethylene glycol, polyethylene glycol, glycerol, alkyl ethers of these glycols, N-methylpyrrolidone, 1,3-dimethylimidazolidine, dihydroxyethyl sulfide, 2-pyrrolidone, dimethyl sulfoxide, sulfolane, diethanolamine, triethanolamine, ethanol, isopropyl alcohol, and the like.

### EXAMPLES

The present invention is described in detail below by way of examples and comparative examples. Note that the following examples merely illustrate one aspect of the present invention. The present invention is not limited to the following examples.

### Example 1

Seast 900A (manufactured by Tokai Carbon Co., Ltd.) was used as carbon black. The carbon black was oxidized with ozone for seven hours at a pressure of 0.02 MPa and a flow rate of 5 l/min using an ozone generator ("CO-101" manufactured by Yamato Scientific Co., Ltd.). After the addition of purified water, the mixture was stirred to prepare a slurry with a carbon black concentration of 10 wt%.

0.05 kg of a styrene-acrylic acid resin aqueous solution ("Joncryl 52" manufactured by Johnson Polymer) and 0.01 kg of a water-dispersible polyisocyanate ("WD-723" manufactured by Mitsui Chemicals Polyurethanes, Inc.) were added to 1 kg of the slurry. The mixture was stirred at 70°C for two hours to disperse the carbon black.

The resulting dispersion was centrifuged at 6000 rpm. After removing the supernatant liquid by ultrafiltration, the product was purified and concentrated to obtain an aqueous dispersion having a carbon black concentration of 15 wt%.

### Example 2

A slurry having a carbon black concentration of 10 wt% was prepared in the same manner as in Example 1. 0.1 kg of a styrene-acrylic acid resin aqueous solution ("Joncryl 70" manufactured by Johnson Polymer) and 0.01 kg of a water-dispersible polyisocyanate ("WD-723" manufactured by Mitsui Chemicals Polyurethanes, Inc.) were added to 1 kg of the slurry. The mixture was stirred at 70°C for two hours to disperse the carbon black. The resulting dispersion was centrifuged at 6000 rpm. After removing the supernatant liquid by ultrafiltration, the product was purified and concentrated to obtain an aqueous dispersion having a carbon black concentration of 15 wt%.

### Example 3

A slurry having a carbon black concentration of 10 wt% was prepared in the same manner as in Example 1. 0.1 kg of a 10% weak alkaline solution of a styrene-maleic anhydride resin ("Scripset 550" manufactured by Nichiyu solution Inc.) and 0.01 kg of a water-dispersible polyisocyanate ("WD-723" manufactured by Mitsui Chemicals Polyurethanes, Inc.) were added to 1 kg of the slurry. The mixture was stirred at 70°C for two hours to disperse the carbon black. The resulting dispersion was centrifuged at 6000 rpm. After removing the supernatant liquid by ultrafiltration, the product was purified and concentrated to obtain an aqueous dispersion having a carbon black concentration of 15 wt%.

### Comparative Example 1

A slurry having a carbon black concentration of 10 wt% was prepared in the same manner as in Example 1. 0.3 kg of a 10% aqueous solution of partially neutralized sodium polyacrylate ("Aqupaana" manufactured by Sumitomo Seika Chemicals Co., Ltd.) was added to 1 kg of the slurry. The mixture was stirred at 70°C for two hours to disperse the carbon black. The resulting dispersion was centrifuged at 6000 rpm. After removing the supernatant liquid by ultrafiltration, the product was purified and concentrated to obtain an aqueous dispersion having a carbon black concentration of 15 wt%.

### Comparative Example 2

A slurry having a carbon black concentration of 10 wt% was prepared in the same manner as in Example 1. 0.04 kg of a styrene-acrylic emulsion ("ES-50" manufactured by CHIRIKA Co., Ltd.) was added to 1 kg of the slurry. The mixture was stirred at 70°C for two hours to disperse the carbon black. The resulting dispersion was centrifuged at 6000 rpm. After removing the supernatant liquid by ultrafiltration, the product was purified and concentrated to obtain an aqueous dispersion having a carbon black concentration of 15 wt%.

### Comparative Example 3

A slurry having a carbon black concentration of 10 wt% was prepared in the same manner as in Example 1. 0.2 kg of a 10% aqueous solution of a styrene-maleic acid copolymer ("TG-750W" manufactured by Kyoeisha Chemical Co., Ltd.) was added to 1 kg of the slurry. The mixture was stirred at 70°C for two hours to disperse the carbon black. The resulting dispersion was centrifuged at 6000 rpm. After removing the supernatant liquid by ultrafiltration, the product was purified and concentrated to obtain an aqueous dispersion having a carbon black concentration of 15 wt%.

An inkjet printer ink was prepared according to the following formulation using the aqueous dispersion (carbon black concentration: 15 wt%) thus obtained.
Carbon black aqueous dispersion: 40.0%
Glycerol: 20.0%
Surfactant: 0.2%
Amine compound: 0.2%
Deionized water: 39.6%

The water resistance and the fixability of an image printed using the ink were evaluated by the following methods. An inkjet printer "EM-930C" (manufactured by Seiko Epson Corporation) was used for the evaluation. The results are shown in Table 1.

### Water resistance

5 ml of water was sprayed onto paper (EPSON KA420PSK) discharged from the printer after 10 seconds, 20 seconds, 30 seconds, or 1 minute. The water resistance was evaluated by visual observation. A character area was used as an evaluation image pattern so that the difference could be determined easily. The water resistance was evaluated in a normal print mode according to the following criteria (based on the image pattern after 30 seconds).
Good: No elution and spreading were observed.
Fair: Elution was partially observed.
Bad: Elution was observed over the entire image area.

### Fixability

A black solid image printed on paper (EPSON KA420MSH) discharged from the printer was scratched using a 500-yen coin (clean edge) after one minute. The fixability was visually evaluated according to the following criteria.
Good: No change was observed.
Fair: Peeling partially occurred.
Bad: The underlayer (paper) was observed due to peeling.

**TABLE 1**

| | Water resistance | Fixability |
|---|---|---|
| Example 1 | Good | Good to fair |
| Example 2 | Good | Good |
| Example 3 | Good | Good |
| Comparative Example 1 | Bad | Bad |
| Comparative Example 2 | Bad | Fair |
| Comparative Example 3 | Bad | Bad |

As shown in Table 1, when using the inkjet printer inks of the examples prepared utilizing the aqueous dispersion of the hydrophilic carbon black pigment according to the present invention, the print image exhibited excellent water resistance and fixability as compared with the case of using the inkjet printer inks of the comparative examples.

### INDUSTRIAL APPLICABILITY

The hydrophilic carbon black pigment according to the present invention is prepared by crosslinking the functional groups on the surface of the oxidized carbon black and the water-soluble resin in the aqueous medium using the water-dispersible crosslinking agent, and exhibits excellent dispersibility. An inkjet printer ink prepared using the aqueous dispersion of the aqueous carbon black pigment can produce a printed image that exhibits excellent water resistance and fixability, and also enables an image with high reliability to be obtained by high-speed printing.

## Claims

1. A hydrophilic carbon black pigment comprising oxidized carbon black and a water-soluble resin, the hydrophilic carbon black pigment being produced by cross-linking the oxidized carbon black and the water-soluble resin in an aqueous medium using a water-dispersible crosslinking agent, wherein
functional groups have been formed on the surface of the carbon black by oxidation, which functional groups contain active hydrogen;
the water-soluble resin is selected from the group consisting of polyacrylic acid, polymaleic acid, a styrene-acrylic acid copolymer, a styrene-maleic acid copolymer, a styrene-maleic anhydride copolymer, polyvinyl alcohol, a polyether polyol, a hydroxyl group-containing amine polyether, polyoxyethylene, a polyoxyethylene monoalkyl ether, a polyester polyol obtained by a dehydration-condensation reaction of a dibasic acid and a glycol or triol, a lactone polyol obtained by a ring-opening polymerization of cyclic ester monomers, a polycarbonate polyol, an acrylic polyol, a polybutadiene polyol, and a water-soluble phenol resin;
the water-dispersible cross-linking agent is an isocyanate compound containing two or more isocyanate groups in one molecule, the water-dispersible cross-linking agent being obtained by introducing nonreactive hydrophilic groups into an isocyanate-containing compound, and
the isocyanate groups of the isocyanate compound are bonded to the functional groups formed on the surface of the carbon black and the functional groups of the water-soluble resin.

2. A carbon black aqueous dispersion comprising the aqueous carbon black pigment according to claim 1 and an aqueous medium, the aqueous carbon black pigment being dispersed in the aqueous medium.

## Patentansprüche

1. Hydrophiles Rußpigment, umfassend oxidierten Ruß und ein wasserlösliches Harz, wobei das hydrophile Rußpigment hergestellt wird durch Vernetzung des oxidierten Rußes und des wasserlöslichen Harzes in einem wässrigen Medium unter Verwendung eines wasserdispergierbaren Vernetzungsmittels, wobei
durch Oxidation funktionelle Gruppen auf der Oberfläche des Rußes gebildet werden, welche aktiven Wasserstoff enthalten,
das wasserlösliche Harz aus der Gruppe ausgewählt ist, welche aus Polyacrylsäure, Polymaleinsäure, einem Styrol-AcrylsäureCopolymer, einem Styrol-Maleinsäure-Copolymer, einem Styrol-Maleinsäureanhydrid-Copolymer, Polyvinylalkohol, einem Polyetherpolyol, einem Hydroxygruppen enthaltenden Aminopolyether, Polyoxyethylen, einem Polyoxyethylenmonoalkylether, einem Polyesterpolyol, erhalten durch eine Dehydratisierungskondensationsreaktion einer zweibasischen Säure und eines Glycols oder Triols, einem durch eine Ringöffnungspolymerisation von Monomeren cyclischer Ester erhaltenem Lactonpolyol, einem Polycarbonatpolyol, einem Acrylpolyol, einem Polybutadienpolyol und einem wasserlöslichen Phenolharz besteht,
das wasserdispergierbare Vernetzungsmittel eine Isocyanatverbindung ist, die zwei oder mehr Isocyanatgruppen in einem Molekül enthält, wobei das wasserdispergierbare Vernetzungsmittel durch Einführen nichtreaktiver hydrophiler Gruppen in eine Isocyanat enthaltende Verbindung erhalten wird, und
die Isocyanatgruppen der Isocyanatverbindung an die auf der Oberfläche des Rußes gebildeten funktionellen Gruppen und an die funktionellen Gruppen des wasserlöslichen Harzes gebunden sind.

2. Wässrige Rußdispersion, umfassend das wässrige Rußpigment nach Anspruch 1 und ein wässriges Medium, wobei das wässrige Rußpigment in dem wässrigen Medium dispergiert ist.

## Revendications

1. Pigment hydrophile noir de carbone comprenant du noir de carbone oxydé et une résine soluble dans l'eau, le pigment hydrophile noir de carbone étant produit par réticulation du noir de carbone oxydé et de la résine soluble dans l'eau dans un milieu aqueux à l'aide d'un agent de réticulation dispersible dans l'eau, dans lequel des groupes fonctionnels ont été formés à la surface du noir de carbone par oxydation, lesquels groupes fonctionnels contiennent de l'hydrogène actif;
la résine soluble dans l'eau est choisie dans le groupe constitué par l'acide polyacrylique, le poly(acide maléique), un copolymère de styrène-acide acrylique, un copolymère de styrène-acide maléique, un copolymère de styrène-anhydride maléique, un poly(alcool de vinyle), un polyol de polyéther, une amine polyéther contenant un groupe hydroxyle, le polyoxyéthylène, un éther monoalkylique de polyoxyéthylène, un polyol de polyester obtenu par une réaction de déshydratation-condensation d'un acide dibasique et d'un glycol ou d'un triol, un polyol de lactone obtenu par une polymérisation par ouverture de cycle de monomères d'ester cyclique, un polyol de polycarbonate, un polyol acrylique, un polyol de polybutadiène et une résine phénolique soluble dans l'eau;
l'agent de réticulation dispersible dans l'eau est un composé isocyanate contenant deux groupes isocyanate ou plus dans une molécule, l'agent de réticulation dispersible dans l'eau étant obtenu par l'introduction de groupes hydrophiles non réactifs dans un composé contenant des isocyanates, et
les groupes isocyanate du composé isocyanate sont liés aux groupes fonctionnels formés à la surface du noir de carbone et aux groupes fonctionnels de la résine soluble dans l'eau.

2. Dispersion aqueuse de noir de carbone comprenant le pigment aqueux noir de carbone selon la revendication 1 et un milieu aqueux, le pigment aqueux noir de carbone étant dispersé dans le milieu aqueux.
